# EUROPEAN PATENT SPECIFICATION

(11) **EP 1 522 130 B1**
(45) Date of publication and mention of the grant of the patent: **22.11.2017**
(21) Application number: 03764081.0
(22) Date of filing: 30.06.2003
(51) Int. Cl.: H02G 1/08, G02B 6/44

(54) **OPTICAL CABLE INSTALLATION WITH CABLE LUBRICATOR**
INSTALLATION VON LICHTWELLENLEITERN MIT KABELSCHMIERVORRICHTUNG
INSTALLATION DE CABLE OPTIQUE AVEC LUBRIFICATEUR DE CABLE

(30) Priority: 11.07.2002 US 194034
(43) Date of publication of application: 13.04.2005
(73) Proprietor: Prysmian Netherlands B.V., 2627 AN Delft (NL)
(72) Inventor: GRIFFIOEN, Willem, NL-2801 DD Gouda (NL); KEIJZER, Maja, NL-2624 AT Delft (NL); VAN'T HUL, Corenlius, NL-1635 KE Den Hoorn (NL); GREVEN, Willem, NL-9933 AS Delfzijl (NL)
(74) Representative: V.O.
(86) International application number: PCT/IB2003/003488
(87) International publication number: WO 2004/008599

(56) References cited:
- WO-A-01/46735
- FR-A- 2 501 927
- FR-A- 2 655 783
- US-A- 6 116 578
- PATENT ABSTRACTS OF JAPAN vol. 2002, no. 03, 3 April 2002 (2002-04-03) & JP 2001 309519 A (FURUKAWA ELECTRIC CO LTD:THE), 2 November 2001 (2001-11-02)

## Description

### Technical Field

This invention relates to a method and apparatus for installing a cable in a duct, according to the preamble of claims 1 and 11, respectively.

Such a method and apparatus are known from Patent Abstracts of Japan, vol. 2002, no. 03, 3 April 2002 & JP 2001 309519 A.

### Background Art

Various factors must be considered when a fiber optic cable is installed in a protective duct. Some major concerns are the ease of installation and reduction in the amount of time needed to install the cable. Generally, it is desirable to install the longest continuous length of cable possible to reduce the number of splices needed for the cable run. Splices are time consuming to make and incur considerable installation costs. Moreover, it is not desirable to have a large number of splice joints in view of the relatively substantial signal damping caused by each joint in proportion to the total signal damping of the overall signal path.

Protective cable ducts have been channelized in an effort to satisfy these concerns. For this purpose one or more guide tubes, whose interior may have a lower coefficient of friction than the existing duct, are installed in the existing protective duct, thereby establishing separate channels in which cable, optionally at a later time, can be pulled through the protective duct over a greater length.

The pulling of fiber optic cables has now largely been replaced by a combination of blowing and synergetic pushing of the cables. This method is being used now for a variety of cables and ducts, from small (4 mm optical cables in 7/5.5 mm guide tubes, and currently 1.6 mm optical fiber cables in 4/3.2 mm guide tubes) to large (35 mm copper balanced cables in 63/50 mm ducts).

According to the pushing and blowing technique, cables with only a little play in the duct can be installed over long distances. Although the stiffness of the cable contributes more to the friction when passing bends and windings (undulations) in the duct trajectory, pushing becomes more efficient because the cable has less play to develop buckling. Even so, frictional effects have limited the installation lengths attainable by pushing and blowing techniques. Improvements in cable lubrication have been made to overcome those frictional limitations.

During the early development of pushing/blowing installation, cable lubrication was done by leading the cable through a box in contact with a lubricant, e.g., paraffin oil, before entering the cable blowing equipment and the protective duct. That conventional method has two limitations:
(a) The pusher wheels or capstans of most blowing equipments (most of them with the pusher wheels outside the pressurized space) slip over the cable when the cable is wet with lubricant.
(b) The seals from the cable inlet to the pressurized space scrape or blow away most of the lubricant.

The above-mentioned publication JP 2001 309519 A refers to a method to lubricate a cable. Here the lubricant is also wiped over the cable, but this is done outside the pressurised space, just after the mechanical feeding.

Further it is observed that US-A-6 116 578 discloses an apparatus wherein foam is blown into an installation duct. This foam adheres to the cable due to expansion and does not serve to lubricate, but to pick up extra drag forces from the airflow.

FR-A-2 655 783 does refer to a method to lubricate a cable. But the lubricant is not present in a pressurised space. Also the lubricant is not wiped over the cable but spread over the cable by a sonic shockwave (Venturi), supposed to create a local vacuum.

For these reasons the method of lubricating a cable before it is launched has been abandoned by most operators. Instead, the duct is now lubricated before the cable is inserted. This is done by pouring a proper amount of lubricant into the duct, putting a foam plug behind and blowing the plug with lubricant through the duct. This method turned out to be a reliable and satisfactory way of lubricating conventional large diameter ducts. Another way to lubricate is pre-lubrication of the duct by the manufacturer (usually during the extrusion process).

For use in telecommunications access networks, e.g. "fiber-to-the-home" (FTTH) systems, bundles of small diameter guide tubes have been developed for insertion into the protective duct. Here the guide tubes become smaller and smaller, making it more difficult to lubricate with foam plugs. More important, blowing many cables from one point to many different end-locations (houses or offices), and lubricating them with a blown foam plug every time, is rather impractical. Prelubricated ducts (by the manufacturer) have turned out not to be always reliable. A solution to these problems is given by the present invention as follows.

### Disclosure of the Invention

The method according to the invention is characterized by the steps of:
pushing the cable by means arranged in the launching apparatus;
connecting the launching apparatus in airflow communication with the duct through the lubrication compartment of the cable lubricator;
running the cable through the lubrication compartment after the cable exits from the launching apparatus;
pressurizing the lubrication compartment with pressurized airflow from the launching apparatus; and
applying a viscous lubricant to the cable as the cable moves through the pressurized lubrication compartment.

The apparatus according to the invention is characterized in that the pushing means are arranged in the launching apparatus; that the cable lubricator is connected in an operative position between the launching apparatus and the duct, and that the lubrication passage is adapted to convey pressurized air from the launch apparatus into the duct.

The cable lubricator is characterized in that the first connector is adapted to receive, together with the cable, pressurized air through a first guide tube and that the second connector is adapted to be connected to a second guide tube and that the lubrication passage is adapted to convey pressurized air from the first guide tube to the second guide tube.

The present invention consists of a serially connected lubricator with foam-plugs and suitable lubricant, installed in the protective duct downstream of pushing/blowing cable launching equipment. The lubricator operates under pressure and the airflow, needed to blow the cable, is bypassed into the duct. Guide blocks to avoid buckling of the cable when pushed through the relatively large lubricating chamber are provided. The latter is especially important for smaller diameter cable with less stiffness.

The lubricator includes a lubrication compartment that is pressurized with airflow from the launching apparatus. The foam plugs, saturated with a viscous lubricant, are placed in the compartment for contacting the cable. As the cable is run through the pressurized compartment, lubricant is wiped onto the cable as the cable moves in contact with the foam plugs.

### Brief Description of the Drawings

FIGURE 1 is a simplified elevational view, partly in section, of a typical installation of optical fiber cable in a protective duct with cable launching equipment and a cable lubricator constructed according to the present invention.
FIGURE 2 is a sectional view through the protective duct taken along the line 2-2.
FIGURE 3 is a simplified schematic representation of cable launching equipment of FIGURE 1 showing one embodiment of the cable lubricator.
FIGURE 4 is a sectional view through the lubricator taken along the line 4-4.
FIGURE 5 is a simplified elevational view, partly in section, of conventional cable pushing/blowing equipment and an alternative embodiment of the lubricator shown in FIGURE 1, with airflow bypass.
FIGURE 6 is an exploded perspective view of the internal components of the lubricator shown in FIGURE 5.
FIGURE 7 is a simplified elevational view, partly in section, of conventional cable pushing/blowing equipment and an alternative embodiment of the lubricator shown in FIGURE 1, without airflow bypass.
FIGURE 8 is an elevation view, partly in section, of a guide tube in which lubricant droplets, produced by the lubricator of FIGURE 7, are entrained as an aerosol mixture in the pressurized airflow discharged from the lubricator as the cable is inserted through the guide duct.
FIGURE 9 is a simplified flow diagram showing a plurality of lubricators cascaded at spaced locations in a protective duct trajectory in which a cable is being installed by pushing and blowing equipment.
FIGURE 10 is a simplified flow diagram showing a plurality of lubricators installed at spaced locations in a protective duct trajectory in which a cable is being installed by a cascade installation of pushing and blowing equipment.

### Best Mode for Carrying Out the Invention

The invention will now be described on the basis of examples where cables are installed in protective underground cable ducts. Unless otherwise specified, all dimensions are given in metric units.

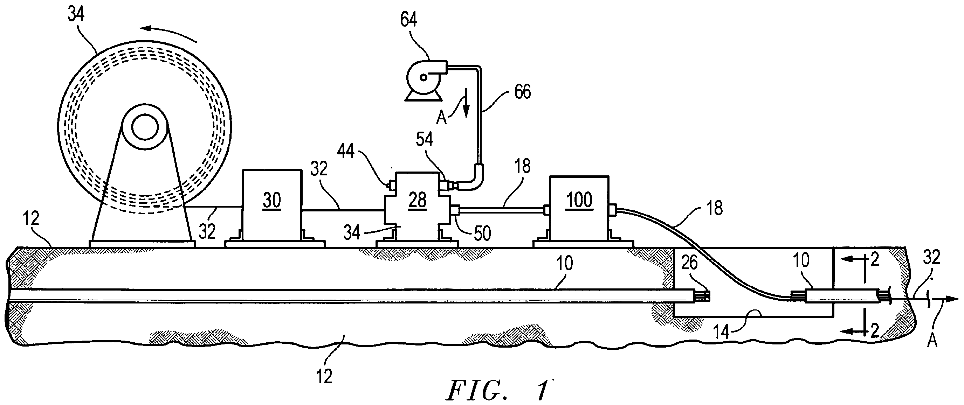

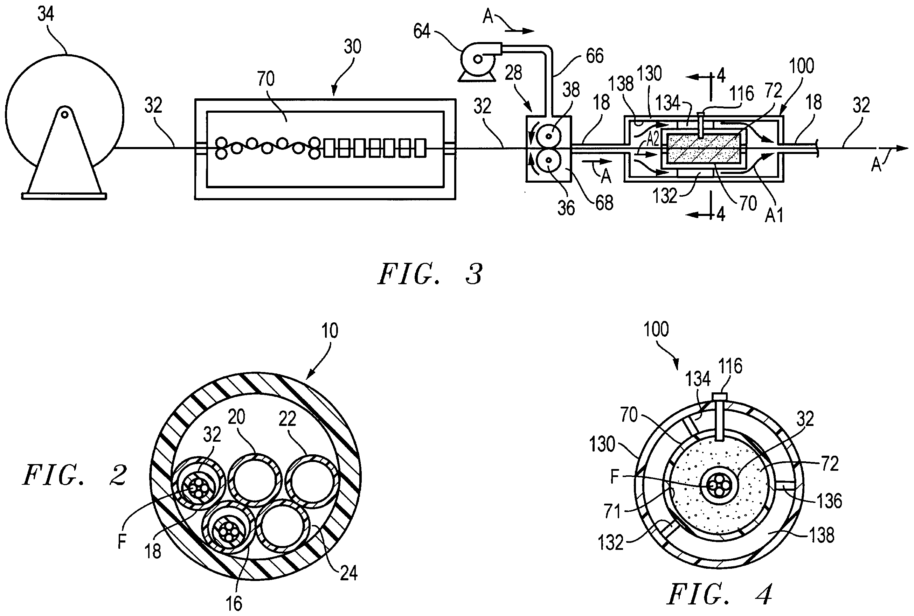

A portion of a typical underground fiber optic conduit network is schematically shown in FIGURE 1. The network includes a longitudinally extending trajectory duct 10 or conduit, typically made of a sturdy plastic material, e.g. , 3.175 cm (1.25 inches), 3.81 cm (1.5 inches) or 5.08 cm (2.0 inches) in diameter. The conduit 10 is buried in the ground 12 and is carrying small diameter guide tubes in which fiber optic cables are to be installed. The conduit 10 and its cables typically extend several thousand meters, and a launching station, such as at a hand-hole 14, is located at a predetermined central location. Here guide-tubes 16, 18, 20,22 and 24 extend out of the protective duct 10 (see also FIGURE 2). In the hand-hole 14 also blowing/pushing equipment can be used in tandem operation. End caps 26 seal off the guide tubes 20, 22, 24 where no cables have been installed.

A cable launching unit 28 is set up adjacent the hand-hole 14, in conjunction with a cable straightener unit 30, to introduce a fiber optic cable 32 into one of the guide tubes. A supply of new fiber optic cable, usually consisting of thousands of meters, is coiled or wound on a reel 34 positioned above ground. The cable 32 is unwound from the reel and is fed into the cable-straightening unit 30.

After the straightening step, the cable is fed into the cable launching unit 28, for example, a combination pushing and blowing cable insertion equipment of the type sold by Sherman & Reilly, Inc. of Chattanooga, Tennessee, or as shown in U.S. Patent 4,850,569, to which reference is made for whatever details described therein as may be necessary for the full understanding of the operation of the pushing and blowing unit.

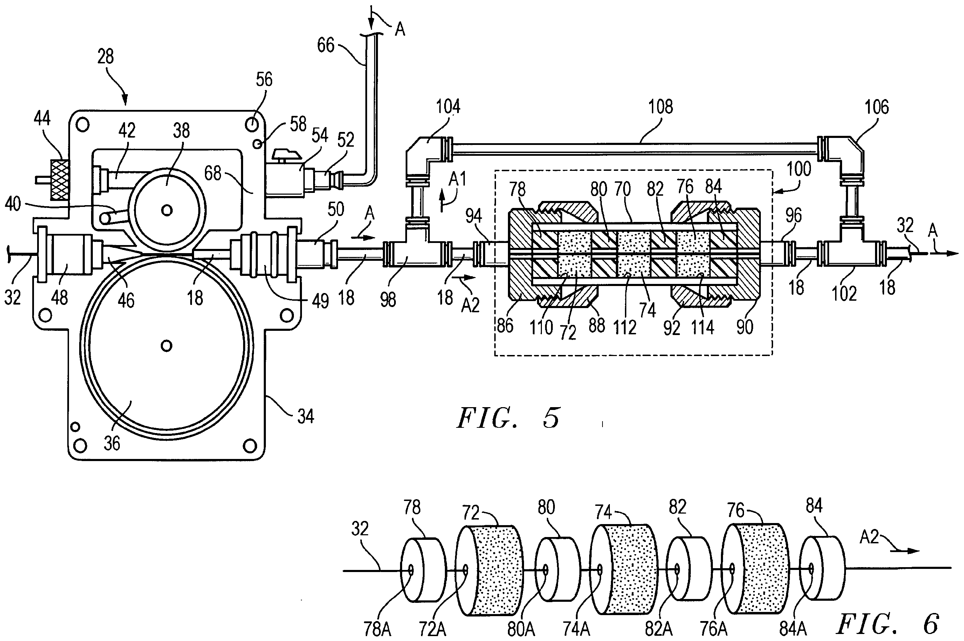

The cable 32, coming from the straightener 30, is to be inserted into the underground guide tube 18. This is done with the synergetic blowing and pushing action of the insertion unit 28. Inside the housing 34 (two sections fastened together, see FIGURE 5, only the bottom section of this equipment shown) the cable 32 is pushed by means of a mechanically (electric or pneumatic) driven wheel 36 that has an outer layer of machined hard metal with a groove for engaging the cable. In order to grip the cable a second (not mechanically driven) idler wheel 38 is pushed against the drive wheel 36. Pushing of the wheel 38, which can pivot on arm 40, is done via spring 42 by turning around the adjustment wheel 44 to control the pushing force of the drive wheel 38.

The cable 32 enters the housing 34 via a conical feed-through 46 that is cut to fit exactly the cable size. This feed-through is mounted on a splittable cylindrical entrance duct 48 that makes an airtight seal when the housing is closed. The guidetube 18 is received in a splittable, cylindrical exit duct 49 also making airtight sealing. The guide tube 18 extends into the housing 34 until almost touching the wheels, to avoid buckling. Optionally the guide tube 18 can be mounted using a push/pull connector 50. Air is fed using a connection 52 via valve 54. The sections of the housing are closed with bolts and nuts through holes 56. For proper alignment, pin-and-holes 58 are used.

Referring again to FIGURE 1, sources of compressed air and hydraulic power (or electric power) are connected to the cable feeder 28. Preferably, the compressed air A is provided by a compressor 64 through delivery conduit 66 at 5 to 10.6 cubic meters per minute (175 to 375 cubic feet per minute (CFM)) and 6.3 to 12.3 Kg per square centimetre (90 to 175 pounds per square inch (PSI)). For the small size cables, installed in the guide tubes, in principle a capacity of 0.57 to 1.4 cubic meters per minute (20 to 50 cubic feet per minute) is sufficient.

An entrance duct clamp releasably holds the entrance duct for guiding the cable 32 toward the cable driver 36. Preferably, the entrance duct is a length of polyethylene tubing.

The air injection block 34 is provided with an entrance seal insert and an exit seal insert adapted to permit passage of the cable 32 while maintaining an airtight seal. The injection block 34, entrance seal insert and exit seal insert are each separable into two generally symmetrical halves to permit installation of the cable 32. The seal inserts are removable and replaceable with similar inserts adapted for different cable and conduit diameters. The entrance seal insert provides a passage slightly larger than the cable. A pair of gaskets is provided in the entrance seal insert to seal around the cable. An inlet fitting is provided to permit injection of compressed air into the injection block 34.

The exit duct clamp is secured to the air injection block 34 to secure the duct to the injection block. The injection block defines a plenum 68 closed by the entrance seal insert and the exit seal insert. An end portion of the guide duct 18 is releasably held in the exit duct clamp. Preferably, the guide duct 28 is a length of cylindrical polyethylene tubing. A duct seal, such as a pair of gaskets, is provided to seal around the guide duct. The exit duct clamp and duct seal the injection block and guide duct to direct passage of air from the plenum into the guide duct.

Referring to FIGURE 1, FIGURE 2 and FIGURE 9, prior to installation of the cable into the guide duct 18, a leading end of the cable 32 is sealed with a smooth plug or end cap 33 having a diameter only slightly larger than that of the cable, e.g., made of brass, or other low friction material. An end cap 33 is attached to the forward end of each cable preferably by a screw-threaded union, and is tapered or torpedo-shaped and rounded on end to avoid sticking of the cable in the guide tube.

To set up the cable feeder 28, as shown in FIGURE 1 and 2, a length of cable is unrolled from the reel 34 and inserted in the entrance duct 48. The cable is positioned so that it extends from the end of the entrance duct approximately the length of the cable feeder. A cable 32 with the smooth plug end cap is inserted into the guide duct 18. The cable feeder is positioned adjacent the cable. The drive wheels, injection block, clamps and seal inserts are separated to provide a generally horizontal passage into which the cable is transversely inserted. The separated parts are then reassembled, closed, and secured to the entrance duct, cable, and guide duct in the cable feeder.

The compressed air, hydraulic source, and/or electric power are connected and initiated to pressurize the plenum 68 and to activate the hydraulic system and the control system. Compressed air A flows at high speed along the cable, propelling the cable through the guide duct. The actuator is switched on to provide hydraulic fluid (or compressed air or electric power) to the motors, and the drive wheels rotate, advancing the cable 32 through the conduit 18.

According to the present invention, after the cable 32 exits the cable launching equipment 28 but prior to entry into the guide tube 18 in the protective underground duct 10, the cable 32 is lubricated by running it through a pressurized lubricator unit 100 as shown in FIGURE 1, FIGURE 3 and FIGURE 5. Field-testing has demonstrated that the coefficient of friction of rubbing engagement of the cable against a protective duct (or guide tube) is a major limiting factor in determining how far a cable can be blown-in. Maximum blowing distance can be obtained when the blowing force equals the frictional force resisting movement of the cable. Consequently the maximum blowing distance varies substantially linearly with the coefficient of friction (through straight duct trajectories). It has been demonstrated by field testing that post-launch lubrication of the cable, under pressurized duct conditions, can substantially reduce the coefficient of friction in the duct, yielding a surprising increase in blowing distance by a factor of 10 or more as compared with the non-lubricated case.

Referring again to FIGURE 1 and FIGURE 2, a schematic representation is given of cable blowing equipment 28 in combination with the cable lubricator 100. The cable straightener 30 may be used in combination with relatively large cables having a large diameter (e.g., 3.9 - 5.0 mm) exceeding a certain minimum size, e.g., in the range of from 1.6 to 2.0 mm and smaller diameters, but is not preferred for use on the smaller cables.

In the preferred embodiment, microcables 32 with diameters ranging from 1.6 to 2.0 mm have been blown into guide tubes 16,18 having an outer diameter of 4 mm. In this embodiment, each cable contains two optical fiber strands F embedded in a UV-acrylate matrix reinforced with strands of aramid yarn and enclosed in a protective polymer jacket. In an alternative embodiment, each cable contains four optical strands F and a gel waterproofing material, for example silicone gel or aquagel, enclosed in a protective polymer jacket. In yet another cable embodiment, the fibers F are enclosed within a small diameter, thin sidewall laser-welded steel tube. This metal tube is loosely filled with one or more optical fibers and a gel waterproofing material, and a protective tubular jacket of (foamed) high-density polyethylene (HDPE) surrounds the small diameter steel tube.

The cable 32 is blown into the guide tube 18 using the cable blowing equipment 28. Immediately after the blowing equipment the cable lubricator 100 is placed, coupled to a lead-in section of the guide tube, and this lead-in section is extended, also by couplings, to the guide tube 18 into which the cable has to be installed.

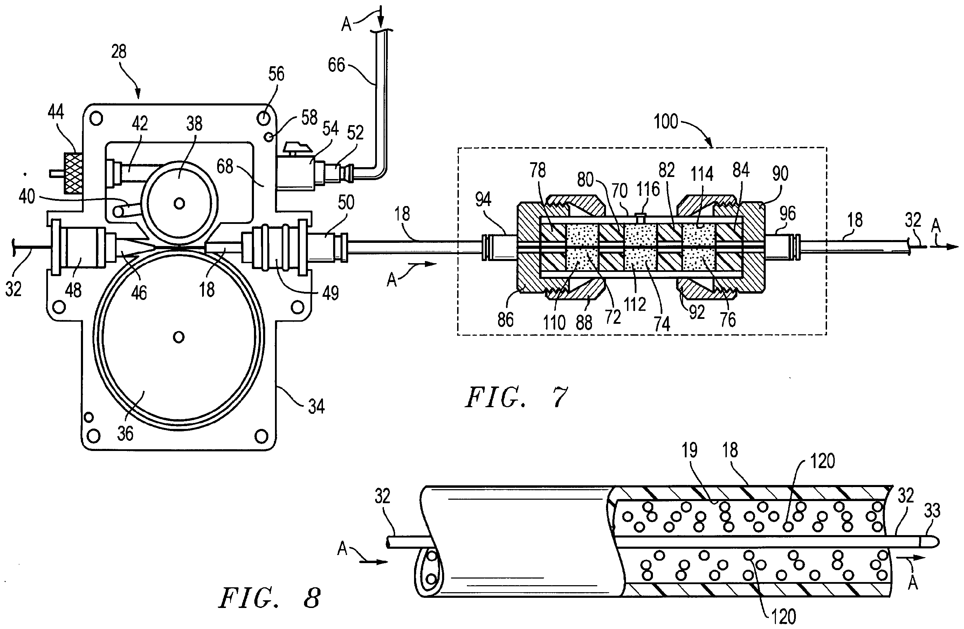

In the exemplary embodiment shown in FIGURE 5 and FIGURE 7 the cable lubricator 100 consists of a cylindrical sidewall section or shell 70 of high density polyethylene (HDPE) material with an outer diameter of 40 mm and an internal cylindrical bore 71 forming a lubrication compartment into which compressed foam-plugs 72, 74, 76 (the size before compression, by a factor of about 3, shown in FIGURE 6) and cylindrical cable guiders 78, 80, 82 and 84 are placed. The ends of the duct-housing 70 are closed air-tight (but not sealing the air flow in the longitudinal direction) using threaded duct-couplings 86,88 and 90,92 on which tubular connector fittings 94, 96 to the 4 mm guide tubes have been mounted.

In the preferred embodiment, a large fraction A1 of the pressurized airflow A is shunted or bypassed around the lubricator into the duct via T-connectors 98,102, angled connectors 104, 106 and a bypass conduit 108. The smaller remainder fraction A2 of the pressurized airflow passes through the longitudinal airflow passage 71 of the lubricator compartment in contact with the foam-plug applicators 72, 74 and 76.

The cable 32 is pushed through the cable lubricator 100 in wiping contact with the foam plugs during blowing. To eliminate buckling of the cable in the relatively large space (compared to the 4 mm diameter guide tube) of the 40 mm diameter lubrication compartment 71, the cable is guided at several places within the compartment. The bore size of the 4 mm tube connectors 94, 96 and duct-coupling 86,90 is formed a little larger than the cable, in this embodiment 2.5 mm I.D. Wiping apertures 72A, 74A and 76A have been punched into the foam-plugs before mounting.

To further eliminate cable buckling, cylindrical cable guiders 78, 80, 82 and 84, made of a rigid plastic material such as nylon, are placed in the lubrication compartment in interleaved relation with the foam plugs. Radial deflection of the cable as it moves through the lubrication compartment is limited by passing the cable through guide apertures 78A, 80A, 82A and 84A formed through the cable guiders. Also here the size of the guide apertures in the cable guiders is 2.5 mm. The guide apertures have conical counterbore inlet pockets to ease pushing of a (new) section of cable through the cable lubricator. The longitudinal dimensions of the cable-guiders 78, 80, 82 and 84 are chosen long enough such that tilting of the guiders in the duct housing 70 is avoided sufficiently to guide the cable without kinking. These lengths may be shorter when the cable guiders are supported and fixed in the lubricator.

The cable-guiders 78, 80, 82 and 84 also divide or partition the cable lubricator compartment into separate sub-compartments 110, 112 and 114. In this way it becomes possible to start with a "very wet" (saturated) foam-plug 72, in order to be sure that enough lubricant is applied and to provision the reservoir with as much lubricant as possible. The first compartment 110 could also contain lubricant only, without a foam-plug, and the last compartment 114 would contain a "just wet" foam-plug 76. The foam-plugs 74 in between can vary from "wet" to "dry."

Preferably, each foam plug is a little less "wet" starting from the first "wet" foam plug 72, thereby forming a lubrication gradient within the pressurized lubrication passage. This arrangement applies a thin film of lubricant rather than a thick viscous layer that would cause the cable to stick to the duct sidewall. Also, this arrangement ensures a transfer of lubricant from the more-wet compartments to the less-wet compartments, thus avoiding premature drying out of the less-wet foam plugs.

Installation of the cable lubricator 100 is accomplished as follows. The T-connectors 98,102, duct-couplings 86,88, duct-housing 70, foam-plugs 72,74,76 and cable guiders 78,80,82,84 are first shifted in order over the cable 32. Then the cable-guiders and the foam-plugs are pressed into the duct-piece (the foam-plugs have to be squeezed and compressed for proper fitting). Next the duct-couplings are screwed to the duct housing. Finally the air-bypass conduit is connected to the T-connectors to complete the cable lubricator. Then the cable 32 can be blown into guide tubes connected to the cable lubricator.

For new installations the cable 32 is cut in front of the cable lubricator 100 and a new lead-in section of guide tube is connected. When the cable reel is empty a new cable can be mechanically coupled to the old cable and pushed through the cable straightner 30, cable blowing equipment 28 and cable lubricator 100. It is also possible to use a straight rod, which is pushed through an empty cable lubricator without opening it, attach the cable to it, and then pull the cable through the lubricator.

When all lubricant is used or the foam plugs become too dry to be effective, the cable lubricator can be opened and refilled through a sealable access port, for example via a screw cap fitting 116 (FIGURE 3 and FIGURE 4), mounted air-tight and extending through the bypass housing 130. It is also possible to use a lubricating nipple with an internal check valve for refill. The lubricant should be a viscous lubricating material that can flow and be absorbed into a fluid permeable applicator. Various lubricants are available from commercial sources and can be used for cable lubrication. However, a water-based emulsion lubricant sold by American Polywater Corporation of Stillwater, Minnesota under its trademark Polywater® Prelube™2000 is preferred. That lubricating material has the consistency of hand lotion under ambient conditions and is readily absorbed into open cell plastic foam materials, natural sponges, woven fiber wicks and other fluid permeable applicator materials.

Various fluid permeable materials can be used to fabricate the lubricant applicator plugs, including synthetic foams, natural sponges and woven fiber wicks. In the preferred embodiment, the preferred fluid permeable applicator material is a resilient cellular plastic foam, such as open cell polyether or polyester polyurethane foam, rubber latex, and polyethylene or vinyl polymers. When a polyurethane foam is used, the foam has a nominal density in the range of about 9.7 to about 19.4 Kg per cubic meter (about 0.6 to about 1.2 pounds per cubic foot), preferably about 13 to about 16.2 Kg per cubic meter (about 0.8 to about 1.0 pounds per cubic foot), and an indentation force deflection (IFD) in the range of about 1.8 to about 6.8 kg (about 4 to about 15 pounds), preferably about 3.6 to about 5.4 Kg (about 8 to about 12 pounds). (Test Method ASTM D3574)

The nominal density in pounds per cubic foot (PCF) polyurethane foam applicator material in one embodiment as measured according to ASTM D3574 is 8.1 to 81 Kg per cubic meter (0.5 to 5 PCF), in one embodiment 12.1 to 32.4 Kg per cubic meter (0.75 to 2 PCF), and in one embodiment 20.2 to 21.9 Kg per cubic meter (1.25 to 1.35 PCF). The foam firmness measured in terms of indentation force deflection (IFD) under ASTM D3574, also referred to as initial load deflection (ILD), for the foam plug material in one embodiment is 6.8 to 45.4 Kg (15 to 100 lbs), in one embodiment 20.4 to 25Kg (45 to 55 lbs), and in one embodiment 22.7 to 23.6 Kg (50 to 52 lbs), respectively. Open cell foams, having the foregoing range of densities and ILD values are compressible under mechanical pressure and will return to their original shape when the pressure is removed.

The cable lubricator 100 can function well with bypass airflow Al as shown in FIGURE 3 and FIGURE 5, applying a thin film of lubricant on the cable jacket. In these embodiments bypass airflow is provided by the conduit 108 that is coupled in parallel airflow relation with the lubricator airflow passage 71 for diverting substantially all of the pressurized airflow around the applicator and into the duct for blowing-assisted transport of the cable through the duct trajectory.

Bypass airflow is also provided by the alternative lubricator embodiment shown in FIGURE 3 and FIGURE 4. In this arrangement, the airflow bypass means is formed by a large diameter housing shell 130 that completely encloses the lubricator housing 70. The lubricator is radially spaced from the tubular housing and is held in cable-running alignment with the housing shell by radial spacer fins 132, 134 and 136. The annulus 138 between the housing shell and lubricator housing 70 forms a bypass airflow passage for conveying a large fraction A1 of the pressurized airflow from the launch apparatus 28 into the guide tube 18.

In this alternative embodiment the airflow passage of the lubricator is pressurized by a relatively small airflow A2. Only a single foam-plug absorbent applicator 72 is placed in the lubricant reservoir housing for wiping lubricant onto the cable 32 as it moves through the pressurized airflow passage 71. This arrangement may be used for running relatively stiff cable for which cable-guiders are not needed, e.g., fiber optic cable in which the fibers are enclosed in small diameter steel tubing.

It is also possible to block or eliminate the bypass airflow as shown in FIGURE 7, whereby the entire pressurized airflow A is discharged through the lubricator 100. In that case a sufficient amount of pressurized air will still flow through the holes in the duct couplings and cable guiders, and also through the foam plugs, to propel the cable through the guide tube.

With full airflow through the lubricator (FIGURE 7), small lubricant droplets 120 are stripped away from the foam plugs and become entrained in the pressurized airflow as a "shower" of lubricant droplets, thus forming an aerosol mixture that lubricates the bore 19 of the guide tube 18 as the droplets disperse through the guide tube, as shown in FIGURE 8. The nature of this "shower" depends on the air pressure, length of the guide tube in which the cable is installed and on the lubricant filling of the cable lubricator. Trial and error will determine the parameters for best lubricating effect by this method.

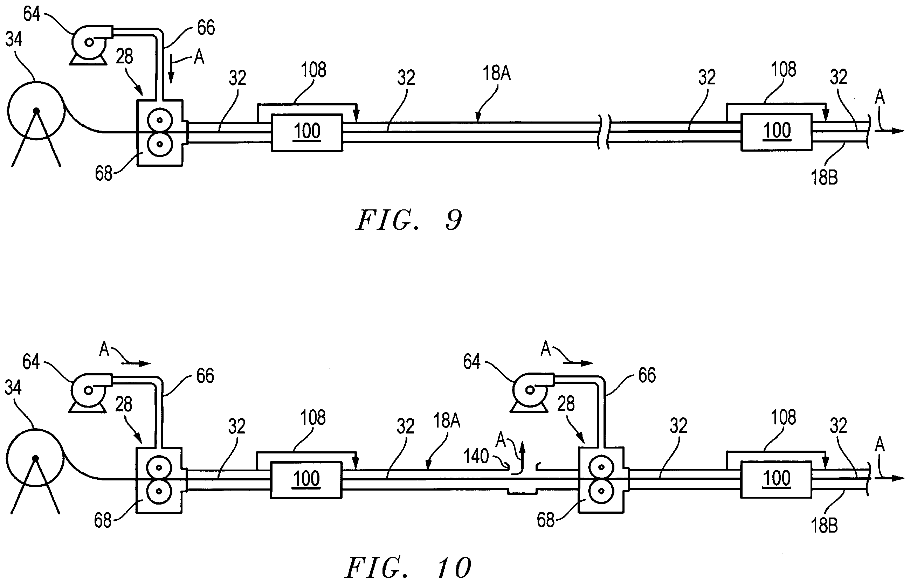

It is also possible, by using a splittable duct access fitting, to place one or more additional cable lubricators 100 further in the duct trajectory, for example in series with tandem duct sections 18A and 18B as shown in FIGURE 9. In this cascade arrangement of lubricators, where the mechanical pushing forces provided by the initial cable launching equipment 28 may be absent or very small, the friction forces of the cable through the cable lubricator will be low enough to allow the viscous forces of the bypass airflow A1 to compensate for the reduced pushing force at the remote locations.

Also additional pushing/blowing equipment 28, 64 with an additional lubricator 100 can be placed further in the duct trajectory, blowing and lubricating in tandem (cascade). This can be done at one or more remote operative positions in the tandem duct sections 18A and 18B of the duct trajectory downstream of the initial cable launching equipment 28, as shown in FIGURE 10. There is a vent fitting 140 installed in the duct section 18A just before reaching the second blowing station. The vent 140 exhausts the pressurized airflow A from the first blower out of the duct section 18A before it reaches the second duct section 18B. By this arrangement there is no airflow communication between the duct sections, since there is no practical way to combine the airflow from the first blower into the plenum of the second blower. The airflow and pushing forces from the first blowing station supplies the needed propelling forces for the cable over the first duct section 18A. The second launching apparatus will also propel the cable, but the new airflow provided by the second blower is only effective in the second duct section 18B, downstream of the second blower.

### Examples

The following tests were performed with the lubricator embodiment shown in FIGURE 5(air bypass open). Blowing was done with 10 bars (10.2 Kg per square centimeter or 145 psi) air-pressure unless otherwise specified. In all experiments the guide tubes were open at 585 meters (1,919 feet) from the point where the cable is launched.

### EXAMPLE 1: PBTP 2.0 mm cable in un-lubricated ribbed 4 mm tube.

First attempt: Un-lubricated installation. Blowing transport of cable started with a rate of advance of 35 m/min (115 feet/min) but stopped because of frictional resistance after reaching only 50 m (164 feet) in the duct trajectory.

Second attempt: Lubricating the tube with water-based lubricant and a foam-plug blown through. Blowing transport of cable started with a rate of advance of 35 m/min (115 feet/min) and the speed had dropped to 7 m/min (23 feet/min) after reaching 225 m (738 feet) in the duct trajectory.

Third attempt: Using the cable lubricator (and another unlubricated tube). Blowing started with 35 m/min (115 feet/min) and the speed had dropped to 8 m/min (26 feet/min) after reaching 500 m (1,640 feet) in the duct trajectory.

### EXAMPLE 2: Nylon 1.8 mm cable in pre-lubricated ribbed 4 mm tube.

First attempt: Installation with no further lubricating. Blowing started with 35 m/min (115 feet/min) and the speed dropped to 5 m/min (16.4 feet/min) at reaching 235 m (771 feet) in the duct trajectory.

Second attempt: Using the cable lubricator (and another unlubricated tube). Blowing started with 35 m/min (115 feet/min) and the speed was still the same upon reaching 585 m (1,919 feet) in the duct trajectory while the pressure was only 7.1 Kg per square centimeter (7 bars or 101.5 pounds per square inch).

The effect of post-launch lubrication with the pressurized cable lubricator 100 is an improvement by a factor of 10 or more in blowing length with respect to the non-lubricated case. Moreover the blowing results reproduce better when using the cable lubricator. The blowing distance improvement of the cable lubricator is also much more striking than the improvement of lubricating the guide tubes alone (or using pre-lubricated tubes), which was an unexpected and surprising improvement.

### Industrial Applicability

For the sake of completeness, it is further noted that the lubrication method of the invention is suitable for installing copper wire signal cables and power cables as well as optical fiber cables.

## Claims

1. A method of installing a cable (32) in a duct (18) wherein the cable is inserted into the duct by pushing means (36, 38) and by a launching apparatus (28) including a source of pressurized air (64) for propelling the cable at least in part by pressurized air blowing-assisted transport through the duct, wherein the cable is lubricated by a cable lubricator (100) comprising a lubrication compartment (70) comprising the steps:
pushing the cable (32) by means arranged in the launching apparatus (28);
connecting the launching apparatus (28) in airflow communication with the duct (18) through the lubrication compartment of the cable lubricator (100);
running the cable (32) through the lubrication compartment (70) after the cable exits from the launching apparatus (28);
pressurizing the lubrication compartment (70) with pressurized airflow from the launching apparatus (28); and
applying a viscous lubricant to the cable (32) as the cable moves through the pressurized lubrication compartment (70).

2. A method of installing a cable according to claim 1, **characterized by** the step of:
diverting (98, 102, 104, 106, 108, 130) a substantial fraction of the pressurized airflow around the lubrication compartment (70) into the duct (18) downstream of the cable lubricator (100) for assisting blowing transport of the cable through the duct.

3. A method of installing a cable according to claim 1 or 2, wherein the lubricant applying step is performed by running the cable in wiping contact engagement with a fluid permeable material (72, 74, 76) that is wetted by a viscous lubricant contained in the lubrication compartment (70).

4. A method of installing a cable according to any of the claims 1-3, including the step of:
limiting radial deflection (78, 80, 82, 84) of the cable (18) as it moves through the lubrication compartment (70).

5. A method of installing a cable according to claim 4, wherein the limiting step is **characterized by**:
constraining movement of the cable through guide apertures (78A-84A) formed in guide blocks (78-84) contained in the lubrication compartment (70).

6. A method of installing a cable according to any of the claims 1-5, wherein the lubricant application step is **characterized by**:
bringing the cable into surface wiping contact against two or more serially disposed fluid permeable applicators (72, 76) having a viscous lubricant content varying from "very wet" to "just wet," and with one or more intermediate applicators (74) having a viscous lubricant content varying from "wet" to "less wet."

7. A method of installing a cable according to claim 1, including the step of:
stripping droplets (120) of lubricant from a reservoir of viscous lubricant contained in the lubrication compartment (70) and entraining the droplets of lubricant in the pressurized air moving through the lubrication compartment.

8. A method of installing a cable according to claim 1 or 2, including the step of:
supplying lubricant from a reservoir of viscous lubricant and wetting the cable with the lubricant as the cable (18) moves through the lubrication compartment (70).

9. A method according to any of the claims 1-8, wherein a further duct (18B) is provided and comprising the further steps of:
installing a second cable lubricator (100) with a lubrication compartment (70) connecting the duct (18A) in airflow communication with the further duct (18B);
running the cable through the lubrication compartment of the second cable lubricator (100) before the cable enters the further duct and applying lubricant on the cable with lubricant in a as it moves through the lubrication compartment of the second lubricator; and
diverting (108) a substantial fraction of the pressurized airflow conveyed through the duct around the second cable lubricator and into the further duct downstream of the second cable lubricator for blowing-assisted transport of the cable through the further duct.

10. A method according to any of the claims 1-8, wherein a further duct (18B) is provided and comprising the further steps of:
installing a second cable launching apparatus (28) including a second source of pressurized air (64) in an operative position between the duct (18A) and the further duct (18B) for propelling the cable at least in part by pressurized air blowing-assisted transport in the further duct;
installing a second cable lubricator (100) with a lubrication compartment (70) connecting the second launching apparatus in airflow communication with the further duct; and
running the cable through the lubrication compartment of the second cable lubricator before the cable enters the further duct and applying lubricant on the cable as it moves through the pressurized lubrication compartment of the second lubricator.

11. Apparatus for installing a cable (32) in a duct (18) according to a method according to any of the preceding claims, comprising:
means (36, 38) for pushing the cable into the duct;
a launching apparatus (28) including a source of pressurized air (64) for propelling a cable at least in part by pressurized air blowing-assisted transport in the duct; and
a cable lubricator (100) including a compartment (70) forming a lubrication passage, and lubrication means (72,74,76) disposed in the compartment for applying a viscous lubricant onto the cable as the cable moves through the lubrication passage,
**characterized in that** the pushing means (36, 38) are arranged in the launching apparatus; that the cable lubricator (100) is connected in an operative position between the launching apparatus (28) and the duct (18), and that the lubrication passage is adapted to convey pressurized air from the launch apparatus into the duct.

12. Apparatus for installing a cable according to claim 11, including:
apparatus (98, 102, 104, 106, 108, 130) coupled in bypass flow relation with the lubricator (100) for diverting a substantial fraction of the pressurized airflow around the lubrication passage into the duct downstream of the cable lubricator for assisting blowing transport of the cable through the duct.

13. Apparatus according to claim 12, wherein the apparatus is adapted to install the cable in a further duct (18B) and comprises
a further cable lubricator (100) connected between the duct (18) and the further duct (18B) at a location downstream relative to the first mentioned cable lubricator (100), the further cable lubricator including a compartment (70) forming a lubrication passage for conveying pressurized airflow from the duct into the further duct, and lubrication means (72-76) disposed in the housing of the further lubricator for applying lubricant onto the cable as the cable and pressurized air move through the lubrication passage of the further lubricator; and
further bypass apparatus (108) coupled in bypass flow relation with the further cable lubricator for diverting a substantial fraction of the pressurized airflow around the lubrication compartment of the further lubricator into the further duct for assisting blowing transport of the cable through the further duct.

14. Apparatus according to claim 12, wherein the apparatus is adapted to install the cable in a further duct (18B) and comprises
a further launching apparatus (28) disposed in cable running alignment between the duct (18) and the further duct (18B) for receiving the cable at a remote location downstream relative to the first mentioned launching apparatus (28), the further launching apparatus including a further source of pressurized air(64) and further pushing means (36, 38) for propelling the cable at least in part by pressurized air blowing-assisted transport in the further duct;
a further cable lubricator (100) connected in an operative position between the further launch apparatus and the further duct, the further cable lubricator including a compartment (70) forming a lubricator passage for conveying pressurized air provided by the further launching apparatus into the further duct, and lubrication means (72-76) disposed in the lubricator housing for applying lubricant onto the cable as the cable and pressurized air move through the lubricator passage into the further duct; and
further bypass apparatus (108) coupled in bypass flow relation with the further cable lubricator (100) for diverting a substantial fraction of the pressurized airflow around the lubrication compartment of the further lubricator into the further duct for assisting blowing transport of the cable through the further duct.

15. An apparatus according to any of the claims 11-14, **characterized in that** the lubricator compartment provides a bypass airflow passage (130) in parallel airflow relation with the lubrication passage, to divert a portion of the pressurized airflow around the lubrication passage for discharge into the duct (18).

16. An apparatus according to claim 15, wherein the bypass airflow passage is **characterized by** a tubular conduit (138) having an inlet end portion coupled in airflow communication with the lubrication passage upstream of the lubrication passage and an outlet end portion coupled in airflow communication with the lubrication passage downstream of the lubricator (100).

17. An apparatus according to claim 15, **characterized in that** the bypass airflow passage comprises a tubular housing (130) adapted for connection in an operative position between a source of pressurized air and the duct, and the lubrication reservoir is enclosed within and spaced from the tubular housing in cable-running alignment with the protective duct.

18. An apparatus according to any of the claims 11-17, **characterized in that** the lubrication passage of the cable lubricator is partitioned into two or more longitudinally spaced compartments, and a plug of fluid permeable material is disposed in at least one of the compartments for wiping the cable as it moves through the lubrication passage.

19. An apparatus according to any of the claims 11-18, **characterized in that** the lubrication means of the cable lubricator comprise a compartment (70) for containing a volume of viscous lubricant, and a sealable refill access port (116) is coupled to the lubrication compartment for replenishing lubricant therein.

20. An apparatus according to any of the claims 11-14, **characterized in that** the lubrication passage of the cable lubricator is partitioned by one or more cable guide blocks (78-84) thereby forming a plurality of longitudinally spaced compartments, and a plug of fluid permeable material (72-76) is disposed in at least one of the compartments for wiping the cable as it moves through the lubrication passage.

21. An apparatus according to any of the claims 11-14, **characterized in that** the lubrication passage of the cable lubricator is partitioned by one or more cable guide blocks (78-84), and each guide block includes a body portion intersected by a longitudinal bore (75A-84A) permitting free longitudinal movement of the cable (32) while limiting radial deflection movement of the cable as the cable moves through the lubrication passage.

22. An apparatus according to any of the claims 11-14, **characterized in that** the lubrication passage of the cable lubricator is partitioned into first, last and one or more intermediate compartments that are longitudinally spaced apart, and a plug of fluid permeable material (72, 76) is disposed in the first compartment and in the last compartment, respectively, for sealing the one or more intermediate compartments and wiping the cable as it moves through the lubrication passage.

23. An apparatus according to any of the claims 11-17, **characterized in that** the lubrication passage of the cable lubricator is partitioned into a first compartment, a last compartment and an intermediate compartment that are longitudinally spaced apart, and the intermediate compartment is filled with a viscous lubricant, and a plug of fluid permeable material (72, 76) is disposed in the first compartment and in the last compartment, respectively, for sealing the intermediate compartment and wiping the cable as it moves through the lubrication passage.

24. An apparatus according to any of the claims 11-14, **characterized in that** the lubrication passage of the cable lubricator is partitioned into three or more compartments that are longitudinally spaced apart, and a plug of fluid permeable material (72, 76) is disposed each compartment, respectively, for wiping the cable as it moves through the lubrication passage, and each successive wiping plug contains a respectively lesser amount of lubricant such that a lubrication gradient is established along the lubrication passage varying from very wet in the first wiping plug to just wet in the last wiping plug.

25. An apparatus according to any of the claims 11-14, **characterized in that** the lubrication passage of the cable lubricator is partitioned by one or more cable guide blocks (78-84) thereby forming a plurality of longitudinally spaced compartments, at least one of the compartments comprising a reservoir for containing a volume of viscous lubricant and a plug of fluid permeable material (72, 74, 76) is disposed in at least one of the compartments for wiping the cable as it moves through the airflow passage.

26. An apparatus according to any of the claims 11-14, **characterized in that** a plug of fluid permeable material is disposed in the lubrication passage of the cable lubricator for introducing a shower of lubricant droplets into compressed air discharged into the protective duct.

27. An apparatus according to any of the claims 18, 20 or 22-24, **characterized in that** the fluid permeable plug comprises a resilient, open cell plastic foam material.

28. An apparatus according to any of the claims 18, 20 or 22-24, **characterized in that** the lubricant applicator comprises a fluid permeable wick of woven fibers.

29. An apparatus according to any of the claims 18, 20 or 22-24, **characterized in that** the lubricant applicator comprises a resilient, compressible natural sponge material.

30. Apparatus according to claim 14, including a vent fitting (140) installed in the duct (18) for exhausting the pressurized airflow out of the duct at a location near the point of entry of the cable into the further launching apparatus (28).

## Patentansprüche

1. Verfahren zum Installieren eines Kabels (32) in einer Führung (18), wobei das Kabel von Drückmitteln (36, 38) und einer Einführvorrichtung (28) einschließlich einer Druckluftquelle (64), um das Kabel mindestens teilweise durch von Blasdruckluft unterstütztem Transport durch die Führung zu treiben, in die Führung einzuführen, wobei das Kabel von einer Kabelschmiervorrichtung (100) mit einer Schmierkammer (70) geschmiert wird, welches Verfahren folgende Schritte umfasst:
Drücken des Kabels (32) durch Mittel, die in der Einführvorrichtung (28) angeordnet sind;
Verbinden der Einführvorrichtung (28) in Luftstromkommunikation mit der Führung (18) durch die Schmierkammer der Kabelschmiervorrichtung (100);
Leiten des Kabels (32) durch die Schmierkammer (70), nachdem das Kabel aus der Einführvorrichtung (28) austritt;
Druckbeaufschlagung der Schmierkammer (70) mit Druckluftstrom von der Einführvorrichtung (28); und
Anbringen eines dickflüssigen Schmierstoffs auf dem Kabel (32), während sich das Kabel durch die druckbeaufschlagte Schmierkammer (70) bewegt.

2. Verfahren zum Installieren eines Kabels nach Anspruch 1, **gekennzeichnet durch** den Schritt, in dem:
ein wesentlicher Bruchteil des Druckluftstroms um die Schmierkammer (70) herum in die Führung (18) stromabwärts von der Kabelschmiervorrichtung (100) umgeleitet (98,102,104,106,108,130) wird, um den Blastransport des Kabels durch die Führung zu unterstützen.

3. Verfahren zum Installieren eines Kabels nach Anspruch 1 oder 2, wobei der Schritt des Anbringens von Schmierstoff durchgeführt wird, indem das Kabel in Wischkontakt mit einem flüssigkeitsdurchlässigen Material (72, 74, 76), das von einem in der Schmierkammer (70) enthaltenen dickflüssigen Schmierstoff benetzt wird, geleitet wird.

4. Verfahren zum Installieren eines Kabels nach einem der Ansprüche 1-3, umfassend den Schritt, in dem:
die radiale Ablenkung (78, 80, 82, 84) des Kabels (18), während es sich durch die Schmierkammer (70) bewegt, begrenzt wird.

5. Verfahren zum Installieren eines Kabels nach Anspruch 4, wobei der begrenzende Schritt **gekennzeichnet ist durch**:
das Beschränken der Bewegung des Kabels **durch** Führungsöffnungen (78A-84A), gebildet in Führungsblöcken (78-84), die sich in der Schmierkammer (70) befinden.

6. Verfahren zum Installieren eines Kabels nach einem der Ansprüche 1-5, wobei der Schritt, in dem das Schmiermittel angebracht wird, **dadurch gekennzeichnet ist, dass**:
das Kabel in Oberflächenwischkontakt gebracht wird gegen zwei oder mehr in Serie angeordnete flüssigkeitsdurchlässige Applikatoren (72, 76) mit einem dickflüssigen Schmierstoffgehalt, der von "sehr nass" zu "kaum nass" variiert, und mit einem oder mehr Zwischenapplikatoren (74) mit einem dickflüssigen Schmierstoffgehalt, der von "nass" bis "weniger nass" variiert.

7. Verfahren zum Installieren eines Kabels nach Anspruch 1, umfassend den Schritt, in dem:
Tröpfchen (120) von Schmierstoff aus einem Reservoir mit dickflüssigem Schmierstoff, enthalten in der Schmierkammer (70), abgezogen werden und die Schmierstofftröpfchen in der Druckluft, die sich durch die Schmierkammer bewegt, mitgenommen werden.

8. Verfahren zum Installieren eines Kabels nach Anspruch 1 oder 2, umfassend den Schritt, in dem:
Schmierstoff aus einem Reservoir mit dickflüssigem Schmierstoff zugeführt wird und das Kabel (18), während es sich durch die Schmierkammer (70) bewegt, mit dem Schmierstoff benetzt wird.

9. Verfahren nach einem der Ansprüche 1-8, wobei eine weitere Führung (18B) bereitgestellt ist, und das Verfahren ferner folgende Schritte umfasst:
Installieren einer zweiten Kabelschmiervorrichtung (100) mit einer Schmierkammer (70), die die Führung (18A) in Luftstrom-Kommunikation mit der weiteren Führung (18B) verbindet;
Leiten des Kabels durch die Schmierkammer der zweiten Kabelschmiervorrichtung (100), bevor das Kabel in die weitere Führung eintritt, und Anbringen von Schmierstoff auf dem Kabel, während dieses sich durch die Schmierkammer der zweiten Schmiervorrichtung bewegt; und
Umleiten (108) eines wesentlichen Bruchteils des Druckluftstroms, befördert durch die Führung um die zweite Kabelschmiermittelvorrichtung herum und in die weitere Führung stromabwärts von der zweiten Kabelschmiermittelvorrichtung für blasunterstützten Transport des Kabels durch die weitere Führung.

10. Verfahren nach einem der Ansprüche 1-8, wobei eine weitere Führung (18B) bereitgestellt ist und das Verfahren die folgenden weiteren Schritte umfasst:
Installieren einer zweiten Kabeleinführvorrichtung (28), umfassend eine zweite Druckluftquelle (64), in einer Betriebsposition zwischen der Führung (18A) und der weiteren Führung (18B), um das Kabel mindestens teilweise durch von Blasdruckluft unterstütztem Transport in die weitere Führung zu treiben;
Installieren einer zweiten Kabelschmiervorrichtung (100) mit einer Schmierkammer (70), die die zweite Einführvorrichtung in Luftstromkommunikation mit der weiteren Führung verbindet; und
Leiten des Kabels durch die Schmierkammer der zweiten Kabelschmiervorrichtung, bevor das Kabel in die weitere Führung eintritt, und Anbringen von Schmierstoff auf dem Kabel, während es sich durch die druckbeaufschlagte Schmierkammer der zweiten Schmiervorrichtung bewegt.

11. Vorrichtung zum Installieren eines Kabels (32) in einer Führung (18) gemäß einem Verfahren nach einem der vorhergehenden Ansprüche, umfassend:
Mittel (36, 38), um das Kabel in die Führung zu drücken;
eine Einführvorrichtung (28) mit einer Druckluftquelle (64), um ein Kabel mindestens teilweise durch von Blasdruckluft unterstütztem Transport in die Führung zu treiben; und
eine Kabelschmiervorrichtung (100) mit einer Kammer (70), die einen Schmierdurchgang bildet, und Schmiermitteln (72, 74, 76), angeordnet in der Kammer, um einen dickflüssigen Schmierstoff auf dem Kabel anzubringen, während sich das Kabel durch den Schmierdurchgang bewegt,
**dadurch gekennzeichnet, dass** die Drückmittel (36, 38) in der Einführvorrichtung angeordnet sind; dass die Kabelschmiervorrichtung (100) in einer Betriebsposition zwischen der Einführvorrichtung (28) und der Führung (18) verbunden ist und dass der Schmierdurchgang geeignet ist, um Druckluft von der Einführvorrichtung in die Führung zu befördern.

12. Vorrichtung zum Installieren eines Kabels nach Anspruch 11, umfassend:
eine Vorrichtung (98, 102, 104, 106, 108, 130), gekoppelt in Umgehungsflussbeziehung mit der Schmiervorrichtung (100), um einen wesentlichen Bruchteil der Druckluft um den Schmierdurchgang herum in die Führung stromabwärts von der Kabelschmiervorrichtung umzuleiten, um den Blastransport des Kabels durch die Führung zu unterstützen.

13. Vorrichtung nach Anspruch 12, wobei die Vorrichtung geeignet ist, um das Kabel in einer weiteren Führung (18B) zu installieren und Folgendes umfasst:
eine weitere Kabelschmiervorrichtung (100), verbunden zwischen der Führung (18) und der weiteren Führung (18B) an einer Stelle stromabwärts in Bezug auf die erste erwähnte Kabelschmiervorrichtung (100), welche weitere Kabelschmiervorrichtung eine Kammer (70) umfasst, die einen Schmierdurchgang bildet, um einen Druckluftstrom von der Führung in die weitere Führung zu befördern, und Schmiermittel (72-76), angeordnet in dem Gehäuse der weiteren Schmiervorrichtung, um Schmierstoff auf dem Kabel anzubringen, während sich das Kabel und Druckluft durch den Schmierdurchgang der weiteren Schmiervorrichtung bewegen; und
eine weitere Umgehungsvorrichtung (108), gekoppelt in Umgehungsflussbeziehung mit der weiteren Kabelschmiervorrichtung, um einen wesentlichen Bruchteil des Druckluftstroms um die Schmierkammer der weiteren Schmiervorrichtung herum in die weitere Führung umzuleiten, um den Blastransport des Kabels durch die weitere Führung zu unterstützen.

14. Vorrichtung nach Anspruch 12, wobei die Vorrichtung geeignet ist, um das Kabel in einer weiteren Führung (18B) zu installieren, und Folgendes umfasst:
eine weitere Einführvorrichtung (28), angeordnet in Kabellaufausrichtung zwischen der Führung (18) und der weiteren Führung (18B) zum Aufnehmen des Kabels an einer entfernten Stelle stromabwärts in Bezug auf die erste erwähnte Einführvorrichtung (28), welche weitere Einführvorrichtung eine weitere Druckluftquelle (64) und weitere Drückmittel (36, 38) umfasst, um das Kabel mindestens teilweise durch von Blasdruckluft unterstützten Transport in die weitere Führung zu treiben;
eine weitere Kabelschmiervorrichtung (100), verbunden in einer Betriebsposition zwischen der weiteren Einführvorrichtung und der weiteren Führung, die weitere Kabelschmiervorrichtung umfassend eine Kammer (70), die einen Schmierdurchgang bildet, um Druckluft, bereitgestellt von der weiteren Einführvorrichtung, in die weitere Führung zu befördern, und Schmiermittel (72-76), angeordnet in dem Schmiervorrichtungsgehäuse, um Schmierstoff auf dem Kabel anzubringen, während sich das Kabel und Druckluft durch den Schmierdurchgang in die weitere Führung bewegen; und
eine weitere Umgehungsvorrichtung (108), gekoppelt in Umgehungsflussbeziehung mit der weiteren Kabelschmiervorrichtung (100), um einen wesentlichen Bruchteil des Druckluftstroms um die Schmierkammer der weiteren Schmiervorrichtung herum in die weitere Führung umzuleiten, um den Blastransport des Kabels durch die weitere Führung zu unterstützen.

15. Vorrichtung nach einem der Ansprüche 11-14, **dadurch gekennzeichnet, dass** die Schmierkammer einen Umgehungsluftstromdurchgang (130) in paralleler Luftstrombeziehung mit dem Schmierdurchgang bereitstellt, um einen Teil des Druckluftstroms um den Schmierdurchgang herum zum Einleiten in die Führung (18) umzuleiten.

16. Vorrichtung nach Anspruch 15, wobei der Umgehungsluftstromdurchgang **gekennzeichnet ist durch** eine röhrenförmige Leitung (138) mit einem Einlassendabschnitt, gekoppelt in Luftstromkommunikation mit dem Schmierdurchgang stromaufwärts von dem Schmierdurchgang, und einem Auslassendabschnitt, gekoppelt in Luftstromkommunikation mit dem Schmierdurchgang stromabwärts von der Schmiervorrichtung (100).

17. Vorrichtung nach Anspruch 15, **dadurch gekennzeichnet, dass** der Umgehungsluftstromdurchgang ein röhrenförmiges Gehäuse (130) umfasst, geeignet zum Verbinden in einer Betriebsposition zwischen einer Druckluftquelle und der Führung, und dass das Schmierreservoir umschlossen ist in und in einem Abstand ist von dem röhrenförmigen Gehäuse in Kabellaufausrichtung mit der schützenden Führung.

18. Vorrichtung nach einem der Ansprüche 11-17, **dadurch gekennzeichnet, dass** der Schmierdurchgang der Kabelschmiervorrichtung in zwei oder mehr Kammern in Längsabstand aufgeteilt ist und ein Stopfen aus flüssigkeitsdurchlässigem Material in mindestens einer der Kammern angeordnet ist, um das Kabel abzuwischen, während es sich durch den Schmierdurchgang bewegt.

19. Vorrichtung nach einem der Ansprüche 11-18, **dadurch gekennzeichnet, dass** die Schmiermittel der Kabelschmiervorrichtung eine Kammer (70) zum Aufnehmen eines Volumens von dickflüssigem Schmierstoff umfassen und ein abdichtbarer Nachfüllzugangsanschluss (116) an die Schmierkammer gekoppelt ist, um Schmierstoff in diese nachzufüllen.

20. Vorrichtung nach einem der Ansprüche 11-14, **dadurch gekennzeichnet, dass** der Schmierdurchgang der Kabelschmiervorrichtung von einem oder mehreren Kabelführungsblöcken (78-84) aufgeteilt wird, um so eine Vielzahl von Kammern in Längsabstand zu bilden, und ein Stopfen von flüssigkeitsdurchlässigem Material (72-76) in mindestens einer der Kammern angeordnet ist, um das Kabel abzuwischen, während es sich durch den Schmierdurchgang bewegt.

21. Vorrichtung nach einem der Ansprüche 11-14, **dadurch gekennzeichnet, dass** der Schmierdurchgang der Kabelschmiervorrichtung von einem oder mehreren Kabelführungsblöcken (78-84) aufgeteilt wird und jeder Führungsblock einen Körperabschnitt umfasst, der von einer Längsbohrung (75A-84A) geschnitten wird, um freie Längsbewegung des Kabels (32) zu erlauben, während radiale Ablenkbewegung des Kabels begrenzt wird, während sich das Kabel durch den Schmierdurchgang bewegt.

22. Vorrichtung nach einem der Ansprüche 11-14, **dadurch gekennzeichnet, dass** der Schmierdurchgang der Kabelschmiervorrichtung in erste, letzte und eine oder mehrere Zwischenkammern, die in einem Längsabstand voneinander sind, aufgeteilt wird, und ein Stopfen aus flüssigkeitsdurchlässigem Material (72, 76) in jeweils der ersten und der letzten Kammer angeordnet ist, um die eine oder mehreren Zwischenkammern abzudichten und das Kabel abzuwischen, während es sich durch den Schmierdurchgang bewegt.

23. Vorrichtung nach einem der Ansprüche 11-17, **dadurch gekennzeichnet, dass** der Schmierdurchgang der Kabelschmiervorrichtung in eine erste Kammer, eine letzte Kammer und eine Zwischenkammer, die in einem Längsabstand voneinander sind, aufgeteilt wird und die Zwischenkammer mit einem dickflüssigen Schmierstoff gefüllt ist, und ein Stopfen aus flüssigkeitsdurchlässigem Material (72-76) jeweils in der ersten Kammer und in der letzten Kammer angeordnet ist, um die Zwischenkammer abzudichten und das Kabel abzuwischen, während es sich durch den Schmierdurchgang bewegt.

24. Vorrichtung nach einem der Ansprüche 11-14, **dadurch gekennzeichnet, dass** der Schmierdurchgang der Kabelschmiervorrichtung in drei oder mehr Kammern, die in einem Längsabstand voneinander sind, aufgeteilt wird, und ein Stopfen aus flüssigkeitsdurchlässigem Material (72, 76) in jeder Kammer angeordnet ist, um das Kabel abzuwischen, während es sich durch den Schmierdurchgang bewegt, und jeder aufeinanderfolgende Wischstopfen eine jeweils geringere Menge an Schmierstoff enthält, sodass entlang des Schmierdurchgangs ein Schmiergefälle entsteht, das von sehr nass im ersten Wischstopfen zu kaum nass in dem letzten Wischstopfen variiert.

25. Vorrichtung nach einem der Ansprüche 11-14, **dadurch gekennzeichnet, dass** der Schmierdurchgang der Kabelschmiervorrichtung von einem oder mehreren Kabelführungsblöcken (78-84) aufgeteilt wird, um so eine Vielzahl von Kammern in einem Längsabstand voneinander zu bilden, von denen mindestens eine der Kammern ein Reservoir zum Aufnehmen eines Volumens von dickflüssigem Schmierstoff umfasst, und ein Stopfen aus flüssigkeitsdurchlässigem Material (72, 74, 76) in mindestens einer der Kammern angeordnet ist, um das Kabel abzuwischen, während es sich durch den Luftstromdurchgang bewegt.

26. Vorrichtung nach einem der Ansprüche 11-14, **dadurch gekennzeichnet, dass** ein Stopfen aus flüssigkeitsdurchlässigem Material in dem Schmierdurchgang der Kabelschmiervorrichtung angeordnet ist, um einen Schauer von Schmierstofftröpfchen in Druckluft, die in die schützende Führung eingeleitet wird, einzuführen.

27. Vorrichtung nach einem der Ansprüche 18, 20 oder 22-24, **dadurch gekennzeichnet, dass** der flüssigkeitsdurchlässige Stopfen ein elastisches Kunststoffmaterial aus offenzelligem Schaumstoff umfasst.

28. Vorrichtung nach einem der Ansprüche 18, 20 oder 22-24, **dadurch gekennzeichnet, dass** der Schmiermittelapplikator einen flüssigkeitsdurchlässigen Docht aus Webfasern umfasst.

29. Vorrichtung nach einem der Ansprüche 18, 20 oder 22-24, **dadurch gekennzeichnet, dass** der Schmierstoffapplikator ein elastisches, zusammendrückbares, natürliches Schwammmaterial umfasst.

30. Vorrichtung nach Anspruch 14, umfassend ein in der Führung (18) installiertes Lüftungsformstück (140), um den Druckluftstrom an einer Stelle nahe dem Eintrittspunkt des Kabels in die weitere Einführvorrichtung (28) aus der Führung abzulassen.

## Revendications

1. Procédé pour installer un câble (32) dans un conduit (18), dans lequel le câble est inséré dans le conduit par des moyens de poussée (36, 38) et par un appareil de lancement (28) comprenant une source d'air sous pression (64) pour propulser le câble, au moins en partie, par le transport assisté par soufflage d'air sous pression à travers le conduit, dans lequel le câble est lubrifié par un lubrificateur de câble (100) comprenant un compartiment de lubrification (70), comprenant les étapes suivantes :
pousser le câble (32) par des moyens agencés dans l'appareil de lancement (28) ;
raccorder l'appareil de lancement (28) en communication d'écoulement d'air avec le conduit (18) par le biais du compartiment de lubrification du lubrificateur de câble (100) ;
étendre le câble (32) à travers le compartiment de lubrification (70) après que le câble est sorti de l'appareil de lancement (28) ;
mettre sous pression le compartiment de lubrification (70) avec l'écoulement d'air sous pression de l'appareil de lancement (28) ; et
appliquer un lubrifiant visqueux sur le câble (32) lorsque le câble se déplace à travers le compartiment de lubrification (70) sous pression.

2. Procédé pour installer un câble selon la revendication 1, **caractérisé par** l'étape suivante :
dévier (98, 102, 104, 106, 108, 130) une partie sensible de l'écoulement d'air sous pression autour du compartiment de lubrification (70) dans le conduit (18) en aval du lubrificateur de câble (100) pour assister le transport par soufflage du câble à travers le conduit.

3. Procédé pour installer un câble selon la revendication 1 ou 2, dans lequel l'étape d'application de lubrifiant est réalisée en étendant le câble en mise en prise de contact d'essuyage avec un matériau perméable au fluide (72, 74, 76) qui est mouillé par un lubrifiant visqueux contenu dans le compartiment de lubrification (70).

4. Procédé pour installer un câble selon l'une quelconque des revendications 1 à 3, comprenant l'étape suivante :
limiter la déviation radiale (78, 80, 82, 84) du câble (18) lorsqu'il se déplace à travers le compartiment de lubrification (70).

5. Procédé pour installer un câble selon la revendication 4, dans lequel l'étape de limite est **caractérisée par** l'étape suivante :
contraindre le mouvement du câble à travers des ouvertures de guidage (78A-84A) formées dans des blocs de guidage (78-84) contenus dans le compartiment de lubrification (70).

6. Procédé pour installer un câble selon l'une quelconque des revendications 1 à 5, dans lequel l'étape d'application de lubrifiant est **caractérisée par** l'étape suivante :
amener le câble en contact d'essuyage de surface contre deux applicateurs (72, 76) perméables au fluide ou plus disposés en série, ayant une teneur en lubrifiant visqueux allant de « très mouillé » à « à peine mouillé » et avec un ou plusieurs applicateurs intermédiaires (74) ayant une teneur en lubrifiant visqueux allant de « mouillé » à « moins mouillé ».

7. Procédé pour installer un câble selon la revendication 1, comprenant l'étape suivante :
retirer des gouttes (120) de lubrifiant d'un réservoir de lubrifiant visqueux contenu dans le compartiment de lubrification (70) et entraîner les gouttes de lubrifiant dans l'air sous pression se déplaçant à travers le compartiment de lubrification.

8. Procédé pour installer un câble selon la revendication 1 ou 2, comprenant l'étape suivante :
fournir du lubrifiant à partir d'un réservoir de lubrifiant visqueux et mouiller le câble avec le lubrifiant lorsque le câble (18) se déplace à travers le compartiment de lubrification (70).

9. Procédé pour installer un câble selon les revendications 1 à 8, dans lequel un autre conduit (18B) est prévu et comprenant les étapes supplémentaires suivantes :
installer un second lubrificateur de câble (100) avec un compartiment de lubrification (70) raccordant le conduit (18A) en communication d'écoulement d'air avec l'autre conduit (18B) ;
étendre le câble à travers le compartiment de lubrification du second lubrificateur de câble (100) avant que le câble n'entre dans l'autre conduit et appliquer le lubrifiant sur le câble avec le lubrifiant à l'intérieur de ce dernier, lorsqu'il se déplace à travers le compartiment de lubrification du second lubrificateur ; et
dévier (108) une partie sensible de l'écoulement d'air sous pression transporté à travers le conduit autour du second lubrificateur de câble et dans l'autre conduit en aval du second lubrificateur de câble pour le transport assisté par soufflage du câble à travers l'autre conduit.

10. Procédé pour installer un câble selon l'une quelconque des revendications 1 à 8, dans lequel un autre conduit (18B) est prévu et comprenant les étapes suivantes :
installer un second appareil de lancement de câble (28) comprenant une seconde source d'air sous pression (64) dans une position opérationnelle entre le conduit (18A) et l'autre conduit (18B) pour propulser le câble, au moins en partie, par le transport assisté par soufflage d'air sous pression dans l'autre conduit ;
installer un second lubrificateur de câble (100) avec un compartiment de lubrification (70) raccordant le second appareil de lancement en communication d'écoulement d'air avec l'autre conduit ; et
étendre le câble à travers le compartiment de lubrification du second lubrificateur de câble avant que le câble ne pénètre dans l'autre conduit et appliquer du lubrifiant sur le câble lorsqu'il se déplace à travers le compartiment de lubrification sous pression du second lubrificateur.

11. Appareil pour installer un câble (32) dans un conduit (18) selon un procédé selon l'une quelconque des revendications précédentes, comprenant :
des moyens (36, 38) pour pousser le câble dans le conduit ;
un appareil de lancement (28) comprenant une source d'air sous pression (64) pour propulser un câble, au moins en partie, par transport assisté par soufflage d'air sous pression dans le conduit ; et
un lubrificateur de câble (100) comprenant un compartiment (70) formant un passage de lubrification, et des moyens de lubrification (72, 74, 76) disposés dans le compartiment pour appliquer un lubrifiant visqueux sur le câble lorsque le câble se déplace à travers le passage de lubrification,
**caractérisé en ce que** les moyens de poussée (36, 38) sont agencés dans l'appareil de lancement ; **en ce que** le lubrificateur de câble (100) est raccordé, dans une position opérationnelle, entre l'appareil de lancement (28) et le conduit (18), et **en ce que** le passage de lubrification est adapté pour transporter l'air sous pression de l'appareil de lancement dans le conduit.

12. Appareil pour installer un câble selon la revendication 11, comprenant :
un appareil (98, 102,104, 106, 108, 130) couplé en relation d'écoulement de dérivation avec le lubrificateur (100) pour dévier une partie sensible de l'écoulement d'air sous pression autour du passage de lubrification dans le conduit en aval du lubrificateur de câble pour assister le transport par soufflage du câble à travers le conduit.

13. Appareil selon la revendication 12, dans lequel l'appareil est adapté pour installer le câble dans un autre conduit (18B) et comprend :
un autre lubrificateur de câble (100) raccordé entre le conduit (18) et l'autre conduit (18B) à un emplacement en aval par rapport au premier lubrificateur de câble (100) mentionné, l'autre lubrificateur de câble comprenant un compartiment (70) formant un passage de lubrification pour transporter l'écoulement d'air sous pression du conduit dans l'autre conduit, et des moyens de lubrification (72-76) disposés dans l'autre boîtier du lubrificateur pour appliquer le lubrifiant sur le câble lorsque le câble et l'air sous pression se déplacent à travers le passage de lubrification de l'autre lubrificateur ; et
l'autre appareil de dérivation (108) couplé en relation d'écoulement de dérivation avec l'autre lubrificateur de câble pour dévier une partie sensible de l'écoulement d'air sous pression autour du compartiment de lubrification de l'autre lubrificateur dans l'autre conduit pour assister le transport par soufflage du câble à travers l'autre conduit.

14. Appareil selon la revendication 12, dans lequel l'appareil est adapté pour installer le câble dans un autre conduit (18B) et comprend :
un autre appareil de lancement (28) disposé en alignement d'extension de câble entre le conduit (18) et l'autre conduit (18B) pour recevoir le câble à un emplacement à distance en aval par rapport au premier appareil de lancement (28) mentionné, l'autre appareil de lancement comprenant une autre source d'air sous pression (64) et d'autres moyens de poussée (36, 38) pour propulser le câble, au moins en partie, par transport assisté par soufflage d'air sous pression dans l'autre conduit ;
un autre lubrificateur de câble (100) raccordé dans une position opérationnelle entre l'autre appareil de lancement et l'autre conduit, l'autre lubrificateur de câble comprenant un compartiment (70) formant un passage de lubrificateur pour transporter l'air sous pression fourni par l'autre appareil de lancement dans l'autre conduit, et des moyens de lubrification (72-76) disposés dans le boîtier de lubrificateur pour appliquer du lubrifiant sur le câble lorsque le câble et l'air sous pression se déplacent à travers le passage de lubrificateur dans l'autre conduit ; et
un autre appareil de dérivation (108) couplé en relation d'écoulement de dérivation par rapport à l'autre lubrificateur de câble (100) pour dévier une partie sensible d'écoulement d'air sous pression autour du compartiment de lubrification de l'autre lubrificateur dans l'autre conduit pour assister le transport par soufflage du câble à travers l'autre conduit.

15. Appareil selon l'une quelconque des revendications 11 à 14, **caractérisé en ce que** le compartiment de lubrificateur fournit un passage d'écoulement d'air de dérivation (130) en relation d'écoulement d'air parallèle par rapport au passage de lubrification, pour dévier une partie de l'écoulement d'air sous pression autour du passage de lubrification pour se décharger dans le conduit (18).

16. Appareil selon la revendication 15, dans lequel le passage d'écoulement d'air de dérivation est **caractérisé par** un conduit tubulaire (138) ayant une partie d'extrémité d'entrée couplée en communication d'écoulement d'air avec le passage de lubrification en amont du passage de lubrification et une partie d'extrémité de sortie couplée en communication d'écoulement d'air avec le passage de lubrification en aval du lubrificateur (100).

17. Appareil selon la revendication 15, **caractérisé en ce que** le passage d'écoulement d'air de dérivation comprend un boîtier tubulaire (130) adapté pour le raccordement dans une position opérationnelle entre une source d'air sous pression et le conduit, et le réservoir de lubrification est enfermé à l'intérieur et espacé du boîtier tubulaire en alignement d'extension de câble avec le conduit de protection.

18. Appareil selon l'une quelconque des revendications 11 à 17, **caractérisé en ce que** le passage de lubrification du lubrificateur de câble est séparé en deux ou plusieurs compartiments longitudinalement espacés, et un bouchon en matériau perméable au fluide est disposé dans au moins l'un des compartiments pour essuyer le câble lorsqu'il se déplace à travers le passage de lubrification.

19. Appareil selon l'une quelconque des revendications 11 à 18, **caractérisé en ce que** les moyens de lubrification du lubrificateur de câble comprennent un compartiment (70) pour contenir un volume de lubrifiant visqueux, et un orifice d'accès de réapprovisionnement (116) pouvant être scellé est couplé au compartiment de lubrification pour le remplir à nouveau de lubrifiant.

20. Appareil selon l'une quelconque des revendications 11 à 14, **caractérisé en ce que** le passage de lubrification du lubrificateur de câble est séparé par un ou plusieurs blocs de guidage de câble (78-84) formant ainsi une pluralité de compartiments longitudinalement espacés, et un bouchon en matériau perméable au fluide (72-76) est disposé dans au moins l'un des compartiments pour essuyer le câble lorsqu'il se déplace à travers le passage de lubrification.

21. Appareil selon l'une quelconque des revendications 11 à 14, **caractérisé en ce que** le passage de lubrification du lubrificateur de câble est séparé par un ou plusieurs blocs de guidage de câble (78-84), et chaque bloc de guidage comprend une partie de corps coupée par un alésage longitudinal (75A-84A) permettant le mouvement longitudinal libre du câble (32) tout en limitant le mouvement de déviation radial du câble lorsque le câble se déplace à travers le passage de lubrification.

22. Appareil selon l'une quelconque des revendications 11 à 14, **caractérisé en ce que** le passage de lubrification du lubrificateur de câble est séparé en un premier compartiment, en un dernier compartiment et en un ou plusieurs compartiments intermédiaires qui sont longitudinalement espacés et un bouchon en matériau perméable au fluide (72, 76) est disposé dans le premier compartiment et dans le dernier compartiment, respectivement pour sceller les un ou plusieurs compartiments intermédiaires et essuyer le câble lorsqu'il se déplace à travers le passage de lubrification.

23. Appareil selon l'une quelconque des revendications 11 à 17, **caractérisé en ce que** le passage de lubrification est séparé en un premier compartiment, en un dernier compartiment et en un compartiment intermédiaire qui sont longitudinalement espacés, et le compartiment intermédiaire est rempli avec un lubrifiant visqueux, et un bouchon en matériau perméable au fluide (72, 76) est respectivement disposé dans le premier compartiment et dans le dernier compartiment, pour sceller le compartiment intermédiaire et essuyer le câble lorsqu'il se déplace à travers le passage de lubrification.

24. Appareil selon l'une quelconque des revendications 11 à 14, **caractérisé en ce que** le passage de lubrification du lubrificateur de câble est séparé en trois compartiments ou plus qui sont longitudinalement espacés, et un bouchon en matériau perméable au fluide (72, 76) est respectivement disposé dans chaque compartiment pour essuyer le câble lorsqu'il se déplace à travers le passage de lubrification et chaque bouchon d'essuyage successif contient une quantité de lubrifiant respectivement moindre, de sorte qu'un gradient de lubrification est établi le long du passage de lubrification allant de très mouillé dans le premier bouchon d'essuyage à peine mouillé dans le dernier bouchon d'essuyage.

25. Appareil selon l'une quelconque des revendications 11 à 14, **caractérisé en ce que** le passage de lubrification du lubrificateur de câble est séparé par un ou plusieurs blocs de guidage de câble (78-84) formant ainsi une pluralité de compartiments longitudinalement espacés, au moins l'un des compartiments comprenant un réservoir pour contenir un volume de lubrifiant visqueux et un bouchon en matériau perméable au fluide (72, 74, 76) est disposé dans au moins l'un des compartiments pour essuyer le câble lorsqu'il se déplace à travers le passage d'écoulement d'air.

26. Appareil selon l'une quelconque des revendications 11 à 14, **caractérisé en ce qu'**un bouchon en matériau perméable au fluide est disposé dans le passage de lubrification du lubrificateur de câble pour introduire une gerbe de gouttes de lubrifiant dans l'air comprimé déchargé dans le conduit de protection.

27. Appareil selon l'une quelconque des revendications 18, 20 ou 22 à 24, **caractérisé en ce que** le bouchon perméable au fluide comprend un matériau résilient en mousse plastique à alvéoles ouvertes.

28. Appareil selon l'une quelconque des revendications 18, 20 ou 22 à 24, **caractérisé en ce que** l'applicateur de lubrifiant comprend une mèche perméable au fluide en fibres tissées.

29. Appareil selon l'une quelconque des revendications 18, 20 ou 22 à 24, **caractérisé en ce que** l'applicateur de lubrifiant comprend un matériau résilient en éponge naturelle compressible.

30. Appareil selon la revendication 14, comprenant une fixation d'évent (140) installée dans le conduit (18) pour laisser s'échapper l'écoulement d'air sous pression hors du conduit à un emplacement à proximité du point d'entrée du câble dans l'autre appareil de lancement (28).
